Europäisches Patentamt

European Patent Office

Office européen des brevets

(19)

(11) Publication number: **0 014 943**

**A1**

(12) # EUROPEAN PATENT APPLICATION

(21) Application number: 80100702.2

(22) Date of filing: 12.02.80

(51) Int. Cl.³: **C 08 J 9/26**
C 08 J 9/34, B 41 N 7/00
B 41 C 3/06, B 41 C 3/04

(30) Priority: 16.02.79 US 12948
23.01.80 US 114613

(43) Date of publication of application:
03.09.80 Bulletin 80/18

(84) Designated Contracting States:
AT BE CH DE FR GB IT LU NL SE

(71) Applicant: Lakes, Ardyth Dale
1281 Brooklands Road
Kettering Ohio 45409(US)

(72) Inventor: Lakes, Ardyth Dale
1281 Brooklands Road
Kettering Ohio 45409(US)

(74) Representative: Rasper, Joachim, Dr.
Bierstadter Höhe 22
D-6200 Wiesbaden(DE)

(54) Process for producing self-metering liquid retentive pad and other porous articles of manufacture.

(57) Porous articles of manufacture are produced by mixing a dry particulate material with a polymeric material, the dry particulate material being insoluble and unreactive with the polymeric material. The mixture is preplasticized to form a composite which is then shaped by a molding technique forming a dense skin (14) on the surface (12) of the article. A solvent is then added to dissolve the dry particulate material.

Below the skin (14), punctuated by a series of very small openings (16), exists an open polymeric network (18) which can be filled with liquids such as inks to produce self-metering pads.

Blowing agents can also be included to increase the resiliency of the finished article. Photopolymeric substances can also be employed to achieve desirable surfact pattern characteristics.

FIG.3

EP 0 014 943 A1

Croydon Printing Company Ltd.

COMPLETE DOCUMENT

## PROCESS FOR PRODUCING SELF-METERING
## LIQUID RETENTIVE PAD AND OTHER POROUS
## ARTICLES OF MANUFACTURE

Background of the Invention

### 1. Field of the Invention

Retentive pads which not only retain a large volume of liquid, but are capable of self-metering have long been desired for lubricating and marking applications. Modern technology in these fields has particularly sought pads which meet these criteria and additionally are sufficiently economical in manufacture that they can be discarded after use. Obviously, long-life pads with lifetimes of 60,000 to 200,000 impressions are highly desirable. The nature of the pad material lends itself to wide application of a myriad of uses.

### 2. Summary of the Prior Art

There have been attempts to produce pads which are self-metering and retentive.

U.S. Patent 3,253,542 to McDonough produced an inked roller which was a substantial improvement over previous rollers and gave thousands of ink transfer operations. However, the process requires a compatible plasticizer for the resin to form a plastisol. Salt is added to the plastisol prior to the formation of molding and later leached out. The molding operation was particularly time consuming. Also, the plastisol must be compatible with the filler liquid, in this case ink vehicle; and this severely limits wide applicability.

U.S. Patent 3,971,315 to Hansen dislcoses a two layer structure which provides a superior reservoir system. However, compatibility between the thermoplastic resin, plasticizer for plastisol formation and ink which is dispersed in the macroporous reservoir layer is necessary and limits wide applicability. While greater fluid retention is available, surface metering is not available here.

Other U.S. Patents of interest are 3,536,796; 3,640,829; 3,718,532; 3,898,360; and 4,157,424. For a discussion of plastisol compositions, see U.S. Patent 3,928,521. Products produced in accordance with the teachings in U.S. Patent 3,928,521 suffer from density variation because of the air entrapped with the void former. While adequate for many purposes, it still does not meet specific design needs and requires lengthy processing steps.

It is highly desirable to manufacture pads and other articles quickly and efficiently and achieve in the manufacturing process articles which are consistent in their density. Casting or molding in a form is not particularly suitable for achieving the density control desired although it has served as the principle process in producing articles with high volume voids. It is also known to produce voids by the use of blowing agents, but in this case, size is hardly predictable or reproducible.

Therefore, it is an object of the present invention to produce liquid retentive pads which have a consistent and reproducible density in a wide variety of shapes, produced from a wide variety of materials.

Furthermore, it is an object of the present invention to produce a pad which can be used with a wide variety of liquids tailored for specific uses and not restricted by the compositional requirements of the pad.

It is an additional object to produce a self-metering retentive pad in an efficient, rapid manner.

Additionally, it is an object of the present invention to produce a pad usable as a marking pad which contains the desirable colorant without subjecting the pad to long process steps of leaching and back-filling.

Moreover, it is an object of the present invention to produce a pad with colorant particles and voids to admit the solubilizing vehicle for the dye.

-4-

It is also an object of the present invention to produce multi-layered ink printers suitable for both low and high centrifugal or surface speed printing operations.

Yet another object of the present invention is to produce extrudates from extrusion molding processing which contain a high proportion of void formers.

Another object of the present invention is to include a blowing agent in combination with void formers to produce an open celled or porous article, thereby permitting a reduction in the amount of void formers required in various molding compositions. This provides pore space for rapid leaching of void former from molded void former-polymer compositions, and to provide pore space for addition of solvents to a molded colorant-polymer composite.

Another object of the present invention is the process of producing a self-inked handstamp or other printing member in the shape of a molded or cast sheet, but embracing certain advances in order to have a highly complicated indicia, yet produced with standard or commercially available equipment designed for the economic production of non-porous or non-inked photopolymer printing plates and stamps.

Summary of the Invention

The above and other objects are accomplished according to the present invention by providing a process comprising the steps of:

mixing dry particulate solid of a size of 2 to 450 microns with a polymeric material in a weight ratio of 2.5:1 to 10:1 solid to polymeric material; said solid being insoluble and unreactive with polymeric material;

preplasticizing the solid and the polymeric material to form a solid-polymer composite;

shaping the composite by casting, extruding, injection or screw-transfer molding, or the like to a finished article shape, whereby a more dense skin portion is formed on the surface of the article; and

adding to the article a solvent in which the solid is dissolved.

The choice of solvents is dependant on both
the nature and purpose of the inclusion of the dry
particulate solid. If the solid is intended merely as
a void former, then the solvent is applied in sufficient
quantity to leach the void former from the article
leaning behind a porous body with a skin layer having
a leather-like feel. If desired, the article can then
be saturated with a wide variety of liquids depending
on the ultimate use for which the article is intended.

The dry particulate solid can be a solid
colorant. The addition of the solvent for the colorant
most advantageously forms a liquid colorant dispensing
pad having a self-metering skin layer. In this process,
the solvent is not a leachate but rather forms a
liquid colorant vehicle within the article.

If the surface of the article is intended to
carry a pattern or indicia, it can be formed during the
molding process or a photopolymer can be employed which
can subsequently be modified by UV radiation. If a
photopolymer is present in the cast or molded article,
then usually prior to the solvent addition step, the
article is exposed to UV radiation through a negative
or mask on one surface of the article. The article is then
washed in a washout bath to purge the unexposed areas
of the article after which it is dried to remove any washout chemicals. The solvent step is then followed as
taught elsewhere in this disclsoure.

The process can also include a granulating
step following the preplasticizing step wherein the preplasticized composite material is granulated for convenient
storage and later used either alone or with other additional
materials.

Any of the above processes may employ a blowing
agent in a controlled amount sufficient to provide voids
for the later addition of the liquid vehicle solubilizing
the dye, or to provide pore spaces for rapid leaching of the void and/or pore former. The presence of the void spaces also can contribute to the control of flexibility of the finished product. Also in utilizing a blowing agent with a void former, it is possible to produce by either extrusion, including co-extrusion, or injection molding, a highly porous product.

It should be noted that all of the methods of the present invention employ a mechanical preplasticizing step such as that achieved by a screw turning within a temperature controlled barrel in order to remove essentially all entrapped air, homogenize, compact and plasticize the composite in such a manner as to provide a high rate of production of product which is uniform in density and formable into articles of various shapes. The preplasticizing of the composite permits rapid forming of the article in the die or mold cavity which other molding techniques, such as compression molding, do not permit. Mechanical preplasticizing is not to be confused with chemical plasticizers as the later is not an equivalent substitute and could not achieve the same effect.

Suitable Polymers

The polymeric materials suitable for use in the present invention are many. Thermoplastic elastomeric resins are used in the basic process. These include a vast number of types making it possible to select almost any resin property for a wide variety of uses. Suitable resins include polyester, polyolefin, polyurethane, ethylene vinyl acetate, 1,2-polybutadiene, styrenebutadiene, polyvinyl chloride, SAN, ABS, ethylenepropylene, styrene-isoprene, styrene-polyolefin, CAB Teflon FEP, nylon, polyethylene and polypropylene.

Also heat curable plasticizable grades of gum stock elastomers may be used such as NBR, SBR, butyl, acrylic, polychloroprene, flourocarbon, silicone, natural rubber, polyisoprene, chlorinated polyethylene, ethylene-propylene, EPDM, PVC/NBR and ethylene-vinyl acetate.

However, in order to use the low thermoplastic gum stock elastomers in the basic mixing and extrusion process, and in order to create a skin effect on the surface of injection molded articles, and also on the extruded pad, the elastomers must be plasticized sufficiently to cause the elastomer to flow under high shear and pressure during the mixing and extrusion, injection or screw transfer molding steps. The flow occurs without the addition of any external heat to either the mixing vessel or the extruder. Also the plasticizer addition must not be sufficient to cause the formation of a true plastisol. The percentage of plasticizer added is typically in the range of 10-30% by weight of the gum stock elastomer.

The above noted polymers are solids. It is also possible to use a liquid or semi-solid initially non-crosslinked polymer for a particular application of the invention. In order to produce a handstamp of an intricate design, polymers such as photopolymers typically composed of polymers with appropriate initiators incorporated therein. These polymers are primarily intended for flexographic or letterpress printing and show depth variation by removal of the top most layer after selected exposure to ultroviolet light by use of an appropriate mask.

Colorants, flow aids, curing agents, etc., are optionally added during the mixing step. Crumb or powdered grades of elastomers are particularly suited for mixing with various colorants and void formers. It is important that the gum stock elastomers and photopolymers always be mixed and molded at temperatures less than the temperature required for curing or cross-linking the elastomer, since curing will cause the elastomer-colorant (with or without void former composite) to become solid and prematurely retard the flow required for obtaining the pronounced skin effect. The molded composite is cut and finished to the desired pad size, and then is filled with appropriate solvent in which the colorant, and void former, if present, are soluble.

-8-

The thermoplastic resins used have a wide melting point range, typically between 75 and 175° C. Commercial extruders, injection or screw transfer molding apparatus can handle any of these resins and plasticized gum stock elastomers.

Casting is well-known in the art. It is possible to cast the colorant-polymer and then apply a vehicle for solubilizing the solid colorant. However, preferred density consistencies, elimination of entrapped air and the unique skin effect are only achieved with extrusion, injection or screw transfer molding. Therefore, pre-forming a sheet by molding is the preferred method for producing the handstamp or similar printing member. Any pattern is from a negative utilizing a photopolymerizable polymer.

Injection or screw transfer molding, primarily intended for thermoplastics alone, or very lightly filled thermoplastics, requires particular attention to parameters in order to injection or screw transfer mold the void-former and/or colorant polymer compositions. This is described below.

Colorants

The choice of colorant is generally from among the organic dyes well-known in the printing part. Resin treated pigments may be used in the invention so long as the resin treated pigment is soluble in the solvent vehicle. "Colorant", as used herein includes organic dyes and resin treated pigments. Conventional organic dyes are preferred because they are widely available in a complete range of colors, chemical types, particle sizes and solvent solubilities with the solvent solubility properties offering great latitude in the selection of solvent vehicles for the dyes in specific applications.

Void-Formers

A large choice of void formers is also possible. The void former must not react with the polymeric composition or the dye. Additionally, the void former must be soluble in the solvent, but non-reactive with it. Typically, salts such as sodium nitrate, sodium chloride, magnesium sulfate (also hydrated forms), sugar and friable
polyglycol waxes have served as void-formers. Such common
chemicals are easily obtained and can be easily obtained
in sizes desired by the user. Size distributions of 2 to
450 microns are used, but preferable size ranges are
specified for specific purposes.

The ratio of the void former to the polymer
can vary widely. Ratios of 2.5:1 to 10:1 of void former to
polymer are general. For specific applications the ratio
can vary greatly. Additionally a layered product may employ
different ratios in the different layers. In the case of a
multitude of layers, the first layer extruded is the most
extreme reservoir layer and farthest from the layer with
the exposed skin which is contacted or pressed to meter
the fluid. For example, a high-speed multi-layer ink
printer has a first reservoir layer of large sized void
formers in a weight ratio of typically 7:1 void former to
resin and the metering layer has samller void formers in
a 4:1 ratio. The reservoir layer can vary greatly as from
10:1 to 5:1 and the metering layer from 5:1 to 2.5:1.

While generally the void former when used with a
particulate organic dye is sized comparable to the dye, it
is not necessary to do so.

The ratio of the colorant to the polymeric
material can vary greatly. Additionally, the ratio can be
considered as colorant, that is, colorant combined with
void-former, to polymeric material. If only colorant is
employed, the ratio of colorant to polymeric material can
vary from 2.5:1 to 10:1 by weight. If void-former is
employed, the ratio of colorant to void-former can vary
from at least 20:1 to 1:1.

As noted above, the solid colorant provides a pad
with an extremely long lifetime and almost continuous renewal with applications of solubilizing vehicle. The solubilizing step can be hastened, with a small loss in the number of impressions, by providing for voids without the use of solid void-formers. This is achieved by utilizing a
blowing agent in the colorant-polymer composition. A
blowing agent is selected which will not decompose or expand
at the termperatures used in the preparation of composites,
but will gas sharply at the temperature utilized in the
forming die or mold.

Blowing agents are well-known and the typical
nitrogen, carbon monoxide and dioxide evolving compounds
may be used. The blowing agent is present in an amount to
foam the composite, usually 0.5 to 5% by weight and generally 3%.

The choice of solvent, i.e., solubilizing
vehicle for the dye, is, of course, dependent upon the
colorant, and void-former if employed. The colorant, and
void-former, if present, must be soluble and non-reactive
with the solvent. While this choice is well within the
skill of a practitioner in the art, typical solvents for
the colorant and void-formers noted are high molecular
weight, high flash point, essentially non-evaporable fluids
such as glycols, glycol ethers, high molecular weight
alcohols, fatty acids, esters of fatty acids, glycol esters,
mineral oil, petroleum oils, alcohol ethoxylates, polyoxyethylene esters, glycerols and glycerol esters. Preferred
choices are polyglycols and high molecular weight alcohols.
The solvent additionally may contain processing aids. An
interesting effect is achieved when the solvent contains
colorant, the same or different from that employed in the
composite.

The polymeric material and composite may also
include lubricants, processing aids, additives, preservatives, etc., in minor amounts. For one preferred embodiment, an ultraviolet activator is present.

In the process it is important that the colorant
and polymer composition be thoroughly mixed. High-shear
type mixers such as Readco Sigma Blade Mixers have been
used. Mixing speeds of 30 to 150 rpm and time periods of
3 to 30 minutes have been employed. During mixing, the
composite may be heated to form a preplasticized mass, and
then cooled and granulated prior to use in the molding Improper mixing results in both large holes and non-channeled areas in the molded polymer matrix which are unacceptable. Testing for completeness of mixing is done by monitoring the torque of the mixer shaft at the controlled mixing temperature. Preplasticizing or mixing is complete when the torque equilibrates and does not increase or decrease more than 10% over a 1 minute time span. Heating, if applied, is generally from 75 to 175°C. The resultant colorant-polymer composite is then cooled. Granulating of the composite is typically done for composites which are prepared and stored for later use.

The composite can then be fed to the extruder at ambient to 205°C, and extruded alone or onto a profile. The through-put temperature is 48 to 205°C and the exit temperature is 65 to 205°C and is typically 10°C lower than the through-put temperatures when using thermoplastic resins. At similar temperatures, times and speeds, additional speeds, additional composites may be simultaneously or subsequently extruded onto the first extruded composite. Simultaneous extrusion is preferred.

There are many commercial extruders on the market suitable for the practice of the present invention. HPM Corporation and Davis-Standard Division can supply technical literature. Typically, the extruder provides for heating and cooling and temperature control at inlet, outlet and through-put. The extruder also provides for venting or a vacuum to remove entrapped air and any gaseous by-products. This is very important in order to assure a reproducible density in the extrudate. Conventional methods of compression molding in a cavity do not result in a high percentage removal of entrapped air, sometimes causing extreme variations in molded product density and dimensions particularly on the molded part surfaces.

In extruding onto a profile, crosshead dies are used. Of course, the profile itself can be obtained by extruding with a straight-through die. The molten or softened solid-polymer composite passes through streamlined channels of ever-decreasing cross section traversing a 30 to 90 degree angle to effect alignment with the profile
flow. With a pressure type die the profile is coated within
the body of the die.

Simultaneous or coextrusion of multiple molten
layers is used in making a multi-layer pad. Commercial
extruders providing for four different molten composites
are available.

Typical temperatures of coextrusion are the same
as for single component extrusion. These temperatures are,
of course, related to the nature of the thermoplastic resin
or gum stock elastomer. The void-former is not affected by
the temperatures employed, and, suprisingly, the presence
of solid particles does not interfere with the success of
extruding the molten or plasticized product.

The length of residence time in the extruder is
influenced primarily by screw length to outer diameter ratio,
the pitch and helix angle of the screw flights, the depth
of the screw flights and the peripheral speed of the screw.
L/D ratios of 10:1 to 32:1 and compression ratios of 1:1
to 5:1 are typical, but can be greatly varied as is known
in the art.

The depth of the layers can vary greatly.
Generally, a larger reservior layer will provide for a longer
life of the pad. The reservoir layer is preferably thicker
than the outer layer. Ratios of 7:1 to 2:1 size of reservoir
to metering layer are typical and pad sizes of 1/8 inches
to 4 inches thickness or diameters are typical.

Conventional injection and screw transfer molding
is not intended for highly loaded (greater than 20%) polymeric materials. In the present invention, the polymer is
extended not only greater than 20% but as much as 100% by
weight of filler (particulate void-former and/or colorant).
The composite is understandably excessively high in viscosity. In injection and screw transfer molding the screw,
injection nozzle, sprue bushing, mold runners and gates must
be designed to permit the very high viscosity composite to
flow freely under high pressures and heat, when used, while being injected or transferred to the mold cavities.
Therefore, all channel dimensions leading from the feed
hopper to the mold cavities are necessarily larger, by 2
to 3 times, than the channel dimensions used in molding
typical extrusion and injection grades of thermoplastic
and thermosetting polymeric materials.

Cast molding has long been used in forming pads.
Simple convenient shapes correlated to the end use are
readily available. An interesting application employing
cast molding of a colorant and/or void-former polymeric
composite in a thin layer upon a supportive substrate or
film (such as commercially available Mylar polyester film),
utilizes the film in a traditional photopolymer apparatus
to produce a self-inked handstamp with an intricate design.
Premolding or pre-forming a composite sheet by extrusion
of a composite upon a supportive film or by coextrusion
of composite and film is a preferred method over casting
because virtually all air pockets are removed from the
composite in the process and the resultant stamp is
dimensionally more uniform.

The pad can have channel sizes ranging from
infinitely small to 450 microns and void volumes between
10 and almost 90% depending on the parameters selected.
The greater the void volume, the greater the amount of
liquid can be retained in the pad.

Layers are produced by molding or casting one
polymer-void-former onto a second polymer-void-former. In
this way a wide variety of pore size or channel network
after solution of the void-former is possible. The non-
printing layer or portion of the pad distant from the
printing surface is termed the reservoir layer.

The depth of the layers can vary greatly.
Generally, a larger reservoir layer will provide for a
longer life of the pad. The reservoir layer is preferably
thicker than the outer layer. Ratios of 7:1 to 2:1 size
of reservior to metering layer are typical and pad sizes
of 1/8 inches to 4 inches thickness or diameters are
typical in the art.

-14-

While the term porous has been used in describing the voids or what are sometimes referred to as open cells, it is preferable to consider that the polymer is a skeletal framework for a diverse network of interconnected channels. It is impossible to designate a typical pore diameter. Rather, it is more reasonable to indicate channel diameters and void percentages.

The extruded, injection or screw transfer molded polymer void-former composite exhibits a skin on the outermost surface. The skin effect on the molded polymer was unexpected, yet subsequently has proved to be significantly advantageous. While the presence of the void-former does not appear to affect the molding process, it does appear that the well-mixed void-former polymer composite undergoes a shift during contact with the die or mold wall while under high pressure or temperature and that essentially all air pockets are removed from the composite as it is moved by the screw from the mold apparatus feed hopper to the die opening or mold cavity. The polymer appears more concentrated at the surface of the molded product, and the void-former, particulate colorant or salt can be said to have migrated away from this surface. In the case of the injection or screw transfer molded polymer, the situation is similar in as much as the void-former, colorant or salt tends to be more concentrated in the interior of the molded article leaving a thin skin layer which is more or less continuous.

Skin layer depths can vary greatly between different chemical types and grades of resins and plasticized elastomers and typically range between 20 and 150 microns. A skin layer may exist between layers of different composition and vary from 20 to 150 microns.

Typically, the skin layer has narrower channel diameters and lower void volume. While great variation is possible, channel sizes of infinitely small to 100 microns are typical and void volume to total volume percentages vary between 10 and 50 percent.

The reservoir area can also vary greatly and can be arranged proportionately. The most extreme reservoir area furthest from the skin can have channel sizes, after solution in the case of the colorant, between infinitely small and 450 microns and void volume percentages between 60 and 86 percent. The channel sizes can be proportionately decreased toward the skin layer.

Basically, the pad consists of a microporous polymer layer integral with a skin portion but upon solution of the colorant, or colorant and void-former, has channels and pores larger than the outer skin portion and the pad has an outer skin portion of a molded microporous polymer layer with the density greatest at the skin portion. The pad can have multi-layers with interconnected channels of various sizes, usually largest in the extreme reservoir, and smallest in the skin and intermediate sizes therebetween. The density is greatest with the skin portion and decreases with the cross-section.

The particular embodiment with the cast polymer for handstamp or the like does not have the skin portion and the density and channel sizes are generally uniform and consistent over the entire casting.

The use process is essentially a pumping process. The polymer must be sufficiently elastomeric to pump upon pressure. The metering rate is dependent on the viscosity of the contained fluid, on the size of the voids in the skin, on the channel sizes in the reservoir, and on the degree of elasticity of the compressible porous pad.

The finishing steps of the molded colorant-polymer composite are dictated by the desired use. Cutting, shaping, forming indicia and affixing of handles, hubs, are well known in the art, and can be performed before or after any of the curing, cross-linking, washing, leaching, filling or solvating steps.

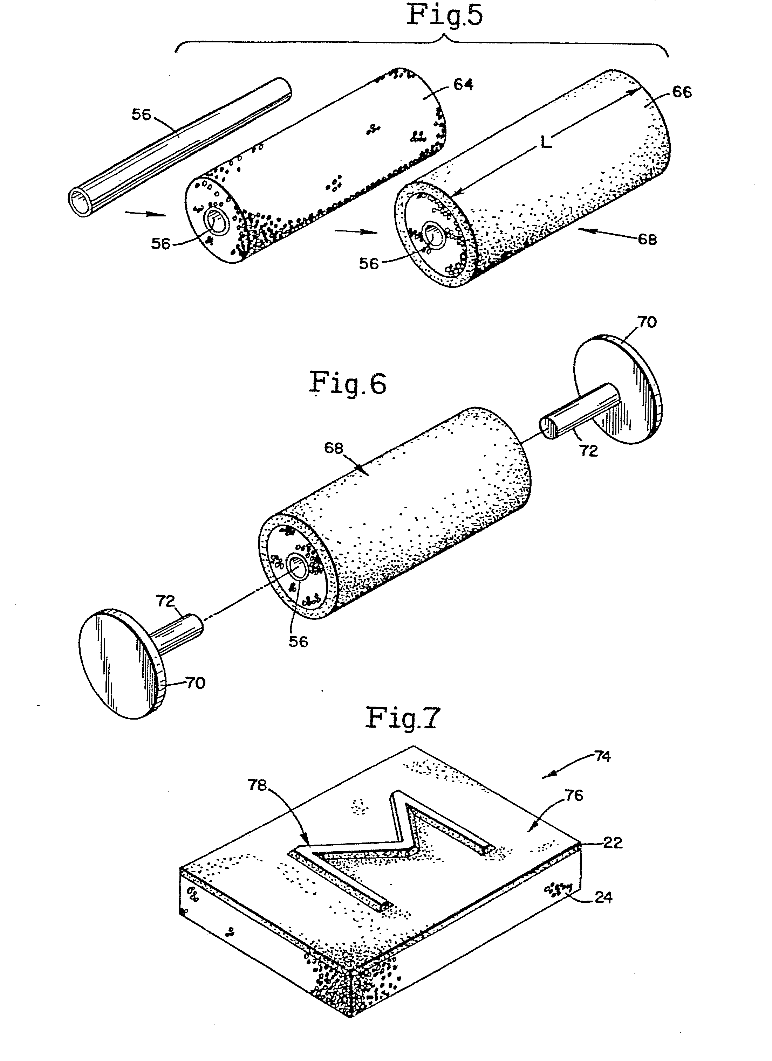

The extruded and leached composite may additionally be treated by conventional methods to form a stamp pad as illustrated in Figure 7. The composite is form molded to receive the appropriate indicia. The skin on the indicia is unaltered by the molding and the portion without indicia has the channels and voids reduced. Thus, printing and metering are exclusively through the indicia. Molding is conventional but generally the temperature is between 75 and 205°C and the residence time in the mold between 5 seconds and 15 minutes.

Filling the composite with liquid, or solvating the colorant with solvent can be done using any number of conventional techniques. Vacuum filling has typically been used in filling voids and soaking is typically used in solvating colorant and/or void-former.

Saturation of the colorant by solvating vehicle can be accomplished by manual application or mechanical metering of the solvent upon demand by the printing surface. The lifetype of the pad is almost limitless because solvent can be applied as often as needed since the pad contains an abundant supply of colorant. Print impressions in excess of the one million are typical.

The void formers are leached from the extruded polymeric matrix by a suitable solvent which does not affect the polymer. Water soluble salts are typically used and warm water is a typical solvent. However, a wide variety of solvents may be employed. Preferably, the solvent does not hinder the final drying step. Washings may be employed to remove any excess solvent.

The leaching or removal of the void formers or salt is easily accomplished by a rapid flushing through the pad. With water soluble void-formers, warm water (generally between 45 and 55°C) is an apt choice of leaching solvent.

The pads are conventionally dried, using ovens (generally at 45 to 95°C) or air drying and subsequently filled with the desired fluid. Conventional filling techniques are employed. Vacuum filling is commonly practiced in ink-filling.

-17-

A wide variety of liquid fillers can be incorporated into the channels and contained in the reservoirs. Those skilled in the art are familiar with suitable fluids and manner of fillings which are conventional. Dyes, pigments, lubricants and other fluids must be chosen of a particle size to pass through the outer skin layer.

By way of example from the many fluids available, commercially prepared inks from Frye Copy Systems, Inc. have been employed as have commercial oils from Dow Corning Corporation. Vacuum filling has typically been used for filling the pads.

The physical features of the products produced by the present invention are illustrated in the accompanying figures.

Brief Description of the Drawings

Figure 1 is a photomicrograph of a marking pad produced according to the inventive process illustrating the existence of a surface skin on the outermost portion of the pad.

Figure 2 is a photomicrograph of a pad produced according to the method of the present invention illustrating the boundary region between two adjacent layers of differing void volumes.

Figure 3 is a flow diagram of the basic processes of the invention.

Figure 4 is a sectional view of a cross-head die for use in the extrusion process of the present invention.

Figure 5 illustrates various precursors in the formation of a product according to the present invention.

Figure 6 is an exploded view of a roller produced according to the present invention.

Figure 7 is a view of a stamp pad with raised indicia.

Figure 8 is a flow diagram of two processes wherein photopolymers are employed to form raised indicia.

-18-

Description of the Preferred Embodiments

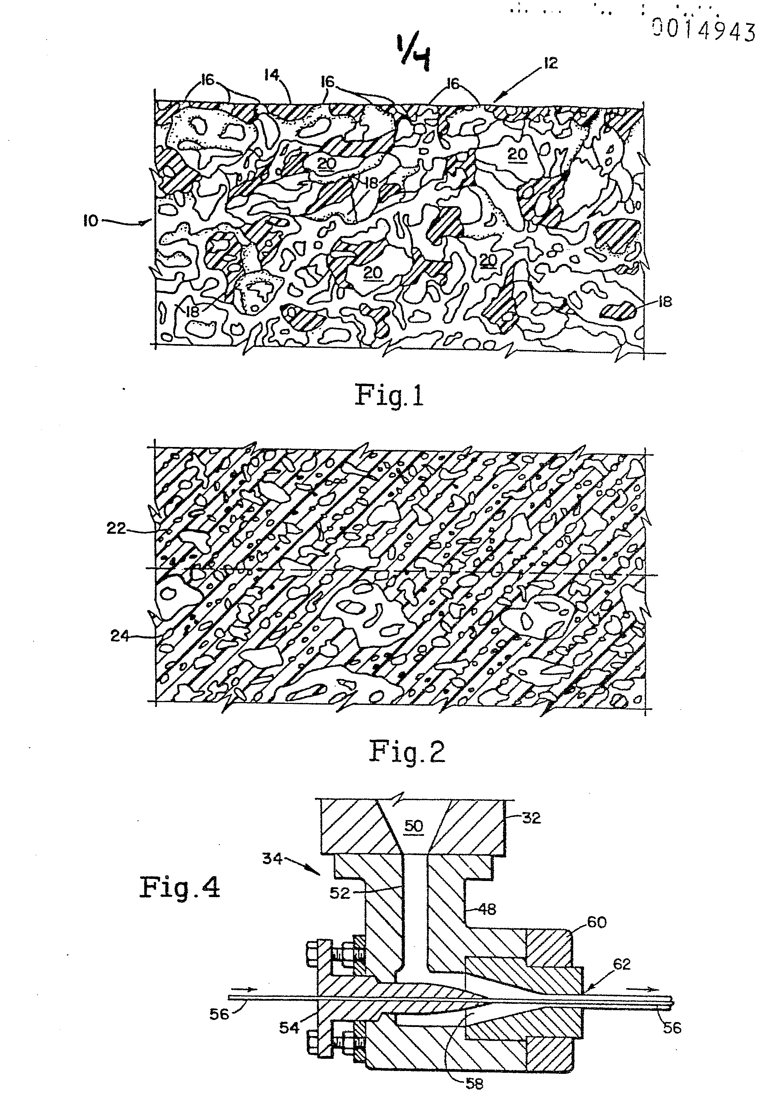

Figure 1 is a reproduction of a photomicrograph taken of a section of a liquid-retentive pad 10 according to the present invention. An examination of Figure 1 reveals that the outer surface 12 of the pad consists of a substantially continuous skin 14 punctuated by a series of very small openings 16. Below the skin level 14 there exists an open network or matrix of polymeric filaments 18 having therebetween a series of continuously connected channels 20 into which a suitable liquid can be inserted. It is to be noted from the photomicrograph that the mean cross-section of the channels 20 is considerably larger than the apparent opening size of openings 16. This smaller size of openings 16 performs a self-metering function inasmuch as only a limited volume of liquid can exit through the series of small openings 16 when the pad 10 is placed under a particular force. This concentration of polymer at the surface 12 of the extruded product thereby providing the skin effect illustrated was an unexpected yet significantly advantageous result of the process employed.

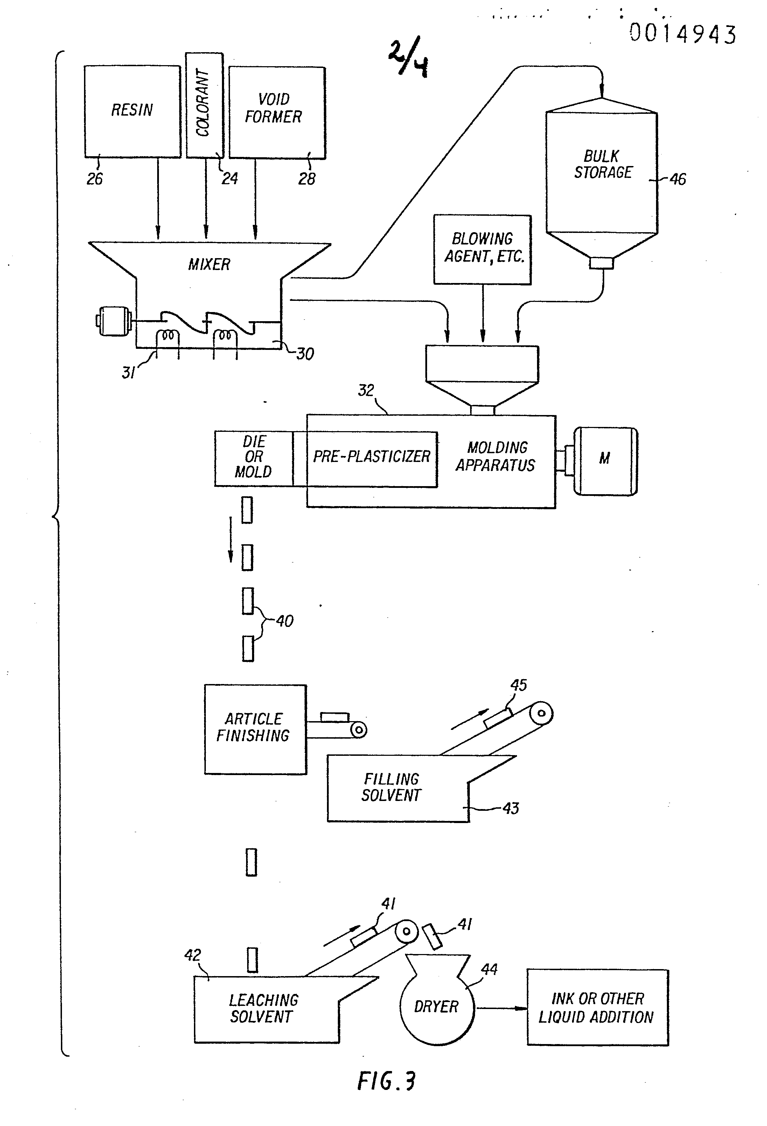

Figure 2 is another reproduction of a photomicrograph illustrating the boundary between two differing regions of polymer wherein the concentration and size of the void former was varied so as to form a surface layer 22 and a reservoir layer 24. It will be noted that in the reservoir layer 24, the channels existent in the elastomeric matrix forming the pad are of significantly greater diameter and frequency, thereby permitting the greater subsequent storage of liquid.

The details of construction of each of the samples illustrated in Figures 1 and 2 are to be found in Examples I and II herein.

Figure 3 shows the general process of forming liquid-retentive elements according to the present invention. In the most general case, a polymeric material 26, which can be either liquid, slab, or particulate solid, a colorant 24, if desired, and a void former 28 are mixed in a mixer 30, which can
optionally include a heating or cooling means 31.
The polymer, colorant, and void former are then fed
from the mixer into molding apparatus 32. Within the
molding apparatus, the material fed from the mixer 30,
or optionally bulk storage 46, is preplasticized and
then forced into a die or mold.

The articles 40 emerging from the die or mold
are then processed by one of two possible methods:

If colorant 24 was used in the composite
preparation, then the elements 40 are inserted into a
filling solvent bath 43 for solvating the colorant
present to form the elements 45. If only void former
is present, the elements 40 are then inserted into a
leaching solvent bath 42 for leaching out the void
former from the elements 40. The leached elements 41
are then removed from the solvent bath and dried in
dryer 44. Subsequently, an ink or other desired liquid
is inserted within the polymeric material to form the
finished product.

Variations on this general process include
bulk storage means 46 for various mixtures of polymer
and void former for later use according to the present
invention. While Figure 3 illustrates the use of but a
single extruder and die, it will be appreciated that
more than one extruder may feed a single die so as to
create a layered product having two or even more layers
with different void volumes and/or channel sizes to
serve various purposes. The leaching of the extruded
product 38 in the solvent bath may be conventionally
performed either before or after the product is periodically served by a cutter, and may include mechanical
agitation or manipulation steps so as to insure complete
removal of the soluble void former from the molded
product. The unleached product is more rigid and thus
easier to shape. A discussion of the exact parameters
employed in the various steps of the process is to be
found in the foregoing summary of the invention, and in
the subsequent examples.

Figure 4 is illustrative of one type of die 48, commonly known as a cross-head, which can be used in the present invention most advantageously to form a roller having an at least semi-rigid central member. As illustrated, the polymer melt 50 including the particulate void former exiting from extruder 32 is introduced into an orifice 54 which conducts the melt 50 so as to surround a guide or "point" 54. A rod or tubular member 56 is continuously inserted from the left through the point 54 and into cavity 58 where the melt 50 envelops the rod or tube 56. A portion of the melt 50 maintained in its plastic state by heater 60 then adheres to the moving rod or tube 56 and exits as a continuous layer of uniform thickness, the thickness being determined by the size of the die opening 62, the viscosity of the melt 50, and the rate of movement of rod or tube 56. While Figure 4 illustrates the use of a 90 degree cross-head die for the production of a supported roller, 45 degree and 30 degree cross-head dies might also be similarly used. For the production of various other shapes accoring to the design intended, straight-through dies and offset dies might be used as well as cross-head dies. Of particular interest is the use of co-extrusion dies whereby a multi-layered product can be formed in a single step using two or more extruders feeding a single die.

In Figure 5, there is illustrated, by way of example, a tubular insert 56 which could be used as a central supporting member of a single-layered roller 64 or double-layered roller 66 by employing the method according to this invention. Subsequent to the extrusion of the polymer containing the void former onto the central supporting member 56, the product, as it exited from the extrusion die, is periodically severed into lenghts (l) convenient to the ultimate utility of the roller 68. The roller is subsequently treated so as to remove the solvent, and an ink or other desired liquid is subsequently inserted by a vacuum or other process into the roller.

-21-

As illustrated in Figure 6, end caps 70 can
then be attached to the roller by inserting the stub
shafts 72 of each end cap wihhin the hollow cylindrical
supporting member 56. A close friction fit between the
stub shafts 72 and hollow member 56 with the possible
addition of a suitable cement maintains the end
elements 70 in position. The end elements 70 prevent
the liquid retained by the foller from exiting the ends
of the roller, thereby insuring the desired self-metering
pumping action across the cylindrical surface of roller
68.

Figure 7 illustrates a finished stamp pad 74
comprising a surface layer 22 and a reservoir layer 24.
The surface layer 22, after its initial formation, has
been depressed and at least partially sealed in region
76 thus leaving undisturbed a raised indicia region 78.
The self-metering function of the surface layer 22 is
unchanged in region 78, while in region 76 the surface
has been modified to substantially prevent the
transpiration of liquid held within the pad 74.

It will be appreciated that injection molds
or screw transfer molds can also be employed in the
present invention with the process and dimensional
modifications to conventional practice noted previously
and explained more fully in the subsequent examples.

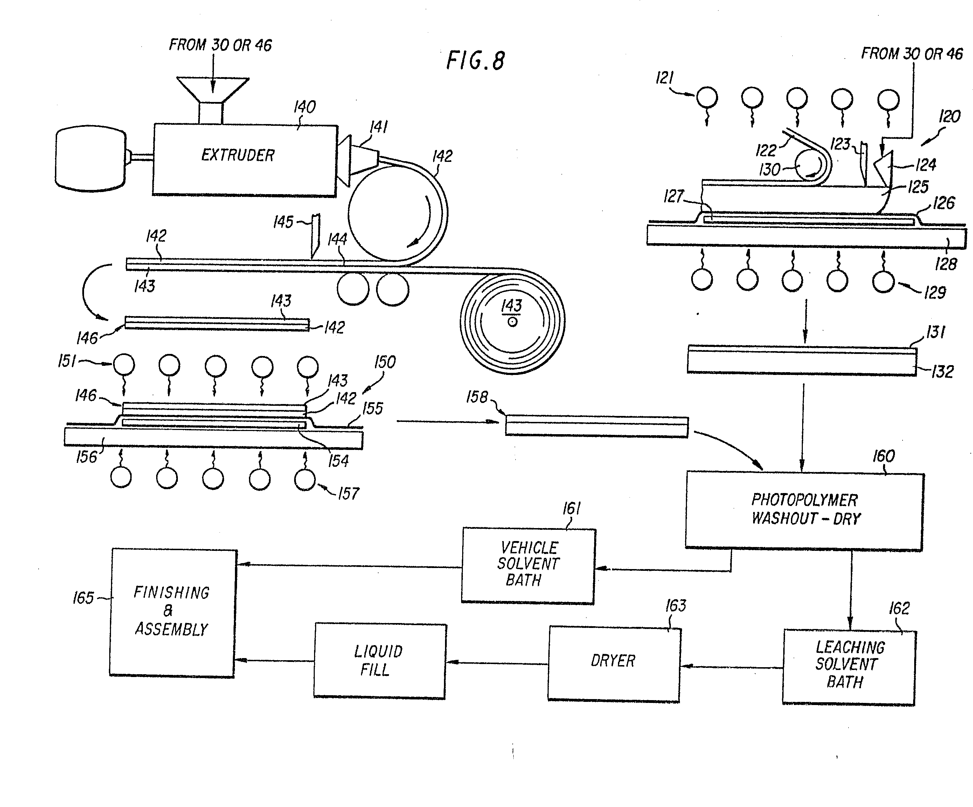

Figure 8 shows the general process of forming
a self-inked handstamp or similar printing member used
in various printing or stamping mechanisms commonly
found in a variety of commercial applications such as
flexographic printing plates. In the most general case,
which is output from a mixer such as mixer 30 in Figure
1, includes a photopolymer, or more properly a monomer
or prepolymer which is polymerizable upon exposure to
ultravoilet or other radiation. The preplasticized photopolymer-colorant-void former composite is then processed
by two possible methods:

Process A - Casting Method

A photographic negative 127 is positioned on
the glass plate 128 of a casting and exposure unit 120.

-22-

A thin clear plastic film 126 is placed over the negative 127 to prevent its contact with the liquid or semi-solid polymer-colorant-void former composite 125. A uniform layer of preplasticized composite 125 and a polyester backing sheet 122 are applied on top of the cover film 126 with the use of a leveling blade 123 and roll down mechanism 130. The casting and exposure unit 120 is then closed and the composite 125 is exposed to UV radiation from the backside 121 and relief side 129 light sources. After exposure, the developed stamp or plate element 132 with adhered polyester backing 131 is removed from the exposire unit 120 and placed into a washout and drying unit 160, where the unexposed areas of the composite are washed out with a mild detergent solution or organic solvent. The element is then dryed in the same unit.

If colorant is used in the organic composite preparation, then the stamp or plate element is inserted into a solvent vehicle bath 161 for solvating or dissolving the colorant present in the developed composite. If only void former is present in the organic composite preparation, then the washed out element is placed in a solvent solvent bath 162 for leaching out the void former from the element. The element is then removed from the solvent bath and dried in dryer 163. Subsequently, an ink or other desired liquid is inserted within the polymeric matrix. The inked or filled element is then assembled and finished 165 by common methods known in the industry for producing self-inked handstamps and various printing members.

Process B - Molding Method

The mixed composite is fed from the mixer into molding equipment 140 which eliminates any air pockets present in the composite and extrudes the composite through a die 141 forming a continuous composite film 142 which is then laminated to a supportive thin film substrate 143. The laminated film composite 144 is fed to a sheeter 145 where the laminate is cut into the

desired size sheets 146. A photographic negative 154 is positioned on the glass plate 156 of any exposure unit 150. A thin clear plastic film 155 is then placed over the negative 154 and a sized sheet of laminated film composite 146 is placed in position over the thin plastic film 155. The exposure unit is closed and the composite is exposed to UV radiation from the backside 151 and relief side 157 light sources for the desired period of time for each side. After exposure, the developed plate or stamp element with backing is removed from the exposure unit and placed into a washout and drying unit 160, where the unexposed areas of the composite are washed out with an appropriate solvent or detergent solution. The element is then dried in the same unit.

If the colorant 103 is used in the original composite preparation, then the stamp or plate element is inserted into a vehicle solvent bath 161 for solvating or dissolving the colorant present in the developed composite. If only void former 104 is present in th original composite preparation, then the washed out element is placed in a leaching solvent bath 162 for leaching out the void former 104 from the element. The element is then removed from the solvent bath and dried in dryer 163. Subsequently, an ink or other desired liquid is inserted within the polymeric matrix.

The inked or filled element is then assembled and finished 165 by common methods known in the industry for producing self-inked handstamps and various printing members.

Variations on this general process outlined in Figure 3 includes bulk storage 46 for various preplasticized and granulated mixtures of polymer, colorant, additives and void formers, and including the addition of blowing agents and additives when desired.

The injection molding process described above utilizes conventional molding apparatus, readily available commercially. Injection and screw transfer molding equipment is available from HPM, Englel, Toshiba. This type of equipment is necessary to preplasticize the various composites prior to injection or transfer of the composite to the mold cavities.

Both types of equipment utilize a screw turning within a heated temperature controlled barrel in order to convey the composite from the feed hopper to the mold cavities, thereby both preplasticizing and eliminating air from the composite. Standard operating conditions and machine settings for molding unfilled thermoplastic and thermosetting materials are available from any of the suppliers. In order to practice the present invention certain modifications are necessary in the injection procedure.

The invention is further illustrated by the following examples in which all parts and percentages are by weight unless otherwise indicated. These nonlimiting examples are illustrative of certain embodiments designed to teach those skilled in the art how to practice the invention and to represent the best mode contemplated for carrying out the invention.

Example I

A self-metering low peripheral speed single layer liquid retentive pad or roller is produced as follows. By weight 87.5 parts of sized particles of ground sodium nitrate from Croton Chemical Company are provided by mechanically sifting the salt through a 40 mesh screen. The sized particles (less than 450 microns) are thoroughly mixed with 12.5 parts of a thermoplastic extrusion grade polyurethane resin in a Sigma Blade type mixer having its jacket maintained at 170 to 178°C during the mixing time of 12 to 15 minutes. The polyurethane resin used has a SA hardness value of 80-90 durometer.

The mixed salt-polymer composite is allowed to cool to 20 to 32°F before granulating in a mechanical blade chopper to a composite particle size dimension of 1/8 inch maximum. The granulated composite is continuously fed to the extruder hopper where it is continuously extruded through a cross-head die to form the desired shape and size part.

-25-

The extruder uses a screw design having a 20:1 L/D ratio and a compression ratio of 1.5:1. The extruder barrel temperature is maintained at 196-202°C and the die temperatures maintained at 188-194°C. The die pressure is controlled at 4,000 to 5,000 p.s.i. by varying the peripheral speed of the screw and by adjusting the barrel temperature up or down within the temperature range stated. The extruder barrel is vented to permit any entrapped air to escape from the composite as it is moved along the barrel toward the forming die. It is extremely important to permit the air to escape since entrapped air pockets will cause undesirable variation in the density of the salt-polymer composite.

The formed extrudate is periodically cut to size as it exits the die opening and the severed parts are guided to a cooling and leaching hot water tank where they are leached at a water temperature of 45 to 55°C for a period of 24 to 48 hours. The residual salt is rinsed from the parts with tap water at room temperatues for 2 to 4 hours.

The rinsed microporous part is dried in an oven between 80 and 85°C for a period of time required to dry off any residual rinse water. The microporous part is completed and ready for use as a pad or roller. The pad or roller may be conventionally filled with liquid such as ink by the methods well known in the art.

Example II

A self-metering high peripheral speed (420 FPM) multi-layer liquid retentive pad or roller is produced as follows. A granulated composite mix for use as the reservoir layer of the pad or roller is produced by preparing exactly the same salt-polymer composite as described in Example I.

A second granulated composite mix for use as a metering layer is prepared in exactly the same method as described in Example I except that 80 parts of 400 mesh (dimensions less than 38 microns) sodium nitrate and 20 parts by weight of the same polyurethane resin are used.

The granulated composites are simulataneously fed to two separate extruders which extrude through a single co-extrusion die. The extruders attach to the die at a 90° angle to each other with the reservoir layer composite passing straight through the die body and opening, and the metering layer composite entering the die at a 90° angle to the reservoir compsoite. The two composites flow together within the die body and exit the die opening as a layered composite. The extruding conditions are the same for each extruder and are the same as the conditions shown in Example I (except that the ratio of metering layer composite to reservoir layer composite delivered to the die is controlled by varying the ratio of the peripheral screw speed of one extruder to that of the second extruder).

As the layered extrudate exits the die opening the layered composite is processed in exactly the same manner as in Example I.

Example III

This example is illustrative of preparing a self-metering low peripheral speed single layer liquid retentive pad or roller employing plasticized gum stock elastomer as the resin and sodium nitrate as the void former. Basically, the procedure of Example I was followed with the following exceptions. By weight 85 parts of a polyurethane millable gum stock elastomer having a Mooney viscosity of between 20 and 40, and with a sulfur cure system added, was mixed with 15 parts of coumarone-indene resin for plasticizing.

The sized particles are mixed with the plasticized gum stock elastomer in a Sigma Blade type mixer keeping the temperature below 100°C for 4 to 5 minutes. The preplasticized salt-elastomer composite is granulated in a mechanical blade chopper to a particle size convenient for use in the extruder. The extruder barrel temperature is maintained at 60-71°C and the extruder die is controlled at 88-99°C to avoid cross-linking. The die pressure is 5000 to 6000 p.s.i.

The extrudate is severed as it exits the die
opening in the same manner as in Example I. The severed
parts are then conveyed to a forced hot air oven and the
elastomeric polymer is cross-linked in the oven at
170-177°C for 12 to 15 minutes before leaching, drying
and filling as shown in Example I.

Example IV

This example is illustrative of a self-metering
high peripheral speed multi-layer liquid retentive pad
or roller. A granulated composite mix for use as the
reservoir layer of the pad or roller is produced as
shown in Example III.

A second granulated composite mix for use
as a metering layer is prepared as shown in Example III
except that 80 parts of 400 mesh (to dimensions less
than 38 microns) sodium nitrate and 20 parts of the same
gum stock elastomer are used.

The composites are simultaneously extruded as
shown in Example II with the exception that the conditions of Example III are employed to avoid cross-
linking.

Subsequent severing, cross-linking, leaching,
drying and filling are as indicated in Example III.

Example V

This example is illustrative of producing a
self-metering single layer liquid retentive ink pad on
a tubular profile.

The process of Example I is followed for
preparing the salt-resin composite. The composite is
extruded from a co-extrusive extruder employing a non-
elastomeric polyurethane resin with no salt in one portion to form the profile and the salt-resin composite
in another second extruding hopper. The conditions
and procedure is as given in Example II.

The roller with the single layer liquid
retentive pad is cut into appropriate lengths, leached
and dried. The pad is filled with ink employing the
vacuum method. Hubs are attached to the roller as
indicated in Figure 6.

Example VI

This example is illustrative of preparing a pad with raised indicia. A self-metering multi-layer stamp pad is produced as follows. The process of Example II is followed exactly for producing a multi-layerd co-extruded composite. As the layered extrudate exits the die opening, it is severed into blanks to a size suitable for the desired stamp pad. The sized composite blanks can now be stored until required, whereupon they are compression molded to receive the desired characters or indicia.

A mold is prepared from a suitable material such as aluminim, stainless steel, bakelite matrix board, etc. having an engraved cavity with the desired stamp size dimensions and an engraved relief of the desired indicia height.

The layered composite blank is placed in the mold cavity with the metering layer in contact with the relief side of the mold. The mold is closed to compress the composite at 50-60 p.s.i. platen pressure for 15-30 seconds at 140-148°C to form the stamp into the fixed dimension of the mold cavity. The mold is then opened and the molded stamp is removed for cooling at ambient temperature.

After cooling, the stamp pad is leached, dried and filled in the same manner as in Example I. After filling, the pad is ready for mounting to the appropriate mounting apparatus such as holders and handles commonly used in the industry.

Example VII

A self-inked liquid retentive pad or roller is produced as follows: By weight 83.3 parts of a metal chelated dye with particles sized to less than 200 microns are thoroughly mixed with 16.7 parts of thermoplastic syndiotactic 1, 2-polybutadiene resin in a Sigma Blade type mixer having its jacket maintained at 130 to 150°C during a mixing time of 5 to 8 minutes.

-29-

The preplasticized dye-polymer composite is allowed to cool to room temperature before granulating in a mechanical blade chopper to a particle size dimension of 1/8 inch, maximum. The granulated composite is continuously fed to the extruder hopper whereit is picked up by the screw, plasticized, and continuously extruded through a cross-head die to form the desired part, shape and size.

The extruder uses a screw design having a 20:1 L/D ratio and a compression ratio of 1:1. The extruder barrel temperature is maintained at 160 to 170°C and the die temperature is maintained at 120 to 160°C. The extruder head pressure is controlled at 4000 to 5000 p.s.i., by varying the peripheral speed of the screw and by adjusting barrel and die temperature up or down within the temperature range stated.

The formed extrudate is periodically cut to size as it exits the die opening and the severed parts are guided to a solvent vehicle bath where the dye present in the extruded parts is solvated by soaking in a polyglycol or high molecular weight alcohol dye vehicle.

The formed extrudate may also be finished with appropriate hardware prior to the solvating step, or packaged and stored for manual or batch solvating at a later date.

Example VIII

A self-metering liquid retentive pad or roller is produced exactly as in Example VII with the single exception that 15 parts by weight of particles of friable high molecular weight polyethylene gylcol wax sized to 200 to 450 microns, are substituted for 15 parts of the metal chelated dye.

Example IX

A self-metering liquid retentive pad or roller is produced exactly as in Example VII with the following exceptions:

1.    A 3.0% addition based on the weight of the thermopoastic resin, of p,p-oxybis benzene sulfonyl hydrazide blowing agent is added to the composite just before the granulating step.

2.  The die temperature at the extruder exit is reduced to 10° to 50°C below the temperature of the die entrance at the extruding head.

3.  A breaker plate is present having 1/8" diameter holes uniformly distributed to create a 50% restriction in the belt flow area.  These three changes cause the composite to expand just as it enters the die cavity from the extruder head and to be set to size by cooling just prior to exiting the die opening.

Example X

This example is illustrative of preparing high-void volume self-metering liquid retentive pad or roller with a significantly reduced percentage of void forming materials.  By weight 70 parts of ground sodium nitrate particles sized to less than 450 microns are thoroughly mixed with 30 parts of thermoplastic syndiotactic 1,2-polybutadiene resin in a Sigma Blade type mixer having its jacket maintained at 130 to 150°C during a mixing time of 5 to 8 minutes.

The mixed salt-polymer composite is allowed to cool to room temperature.  The composite is placed in a mechanical chopper and a 3.5% addition, based on the weight of the thermoplastic resin, of azodicarbonamide chemical blowing agent is made.  The composite is granulated and dry blended with the blowing agent.

The granulated composite with blowing agent is continuously fed to the extruder hopper where it is picked up by the screw, plasticized and mixed, and continuously extruded through a cross-head die to form the desired part, shape and size.

The extruder uses a screw design having a 20:1 L/D ratio and a compression ratio of 1.5:1.  The extruder barrel temperature is maintained at 140 to 150°C. The extruder head pressure is controlled at 3,000 to 4,000 p.s.i., by varying the peripheral speed of the screw and by adjusting barrel and die temperature up and down within the temperature ranges stated above and below. The inlet die temperature is maintained at 140°C and the outlet die temperature is maintained between 85° and 105°C.

The formed extrudate is periodically cut to size as it exits the die opening and the severed parts are guided to a cooling and breaking water tank where they are bleached free of the sodium nitrate salt.

The leading open celled or porous parts are then oven or air dried. The porous parts are complete and ready for use as a pad or roller. The pad or roller may then be conventionally filled with liquid such as ink by the methods well-known in the art.

Example XI

This example is illustrative of preparing an open celled high void volume pad, roller or similar porous structure using a significantly reduced percentage of void forming material. The resultant product is capable of being utilized not only for a liquid retentive pad or roller, but for numerous other applications requiring or desiring an open celled or porous structure having a high degree of void volume and compressibility.

The product is produced exactly as is Example X with the following exceptions:

1. By weight, 14 parts of ethylene vinyl acetate resin having 15% vinyl acetate content and 1 part of DOP plasticizer are substituted for 15 parts of the syndiotactic 1,2-polybutadiene resin.

2. The ground sodium nitrate is sized to between 200 and 450 microns.

This resultant product has a leather like feel, excellent flex resilience, compression rebound, tear strength, and in addition, possess excellent abrasion, oil and ozone resistance and good weatherability. The product demonstrates rapid moisture or fluid absorption thereby providing wide utility for use in items such as:

handle bar, tool and sporting equipment grips
and components, paint applicator rollers and pads, and
sound and shock absorption components and filtering media.

Example XII

A self-metering liquid retentive pad or roller
is produced as follows. The material used in Example VII
is used in this example. Instead of extrusion molding,
injection or screw transfer molding, utilizing the process
and equipment described above, is employed.

When the injection process is utilized the
following deviations from conventional procedures are
used:

1. The screw design is of the low or no
compression type, 1:1 to 1.5:1. This condition is
necessary because after the air is eliminated from the
composite the highly loaded polymer can only be compressed
slightly due to the presence of large quantities of
non-compressible particulate constitutent in the
composites. If too much compression is attempted,
preplastization and flow of the composite will not occur.

2. The screw L/D ratio is 20/1 or greater.
If the machine design has a screw L/D ratio less than
20/1, then the composite is either preheated in an oven
to approximately 100°C in order to improve the plastization
rate obtained with relatively low L/D ratio of screws.

3. All channels or openings in the flow path
of the composite from the feed hopper to the mold
cavities are larger by approximately 100%.

4. The length of the runners in the mold
are kept to a minimum to facilitate rapid delivery of
the necessarily high viscosity composite.

5. Injection pressure is necessarily 50 to
100% higher in order to rapidly move the relatively high
viscosity composite from the hot screw tip to the
substantially lower temperature mold and completely fill
the mold cavities and create the marked skin effect on
the finished part.

6. The molding temperature of the barrel, end cap, nozzle and sprue bushing are 10-25° higher in temperature than that recommended by the suppliers of injection molding grades of resins.

When the screw transfer molding process is utilized the basic equipment and conditions are exactly as for injection molding except that a transfer chamber substitutes for the space where preplasticized composite is accumulated prior to being injected into the mold cavities. It is important that the transfer chamber maintains the temperature of the composite at the same temperature of the composite present at the screw tip.

Example XIII

A self-metering liquid retentive pad or roller is produced exactly as in Example XII with the single exception that 15 parts by weight of particles of friable high molecular weight polyethylene glycol wax, sized to 200 to 450 microns, are substituted for 15 parts of the metal chelated dye.

Example XIV

A self-metering liquid retentive pad or roller is produced exactly as in Example XII with the following exceptions:

1. A 50% addition, based on the weight of the thermoplastic resin, of p,p-Oxybis benzene sulfonyl hydrozide blowing agent is added to the composite just prior to the granulating step.

2. The composite with incorporated blowing agent is held under pressure by incorporating a positive shut-off type nozzle on to the barrel end cap for injection molding.

3. A short shot, less than mold cavity volume, is metered and rapidly injected into the mold where free expansion of the plasticized composite completely fills the cavity. The amount of composite metered is controlled by adjusting the screw back pressure.

-34-

4.    Mold venting is increased to allow
for rapid displacement of the air gases present in the
mold cavities.

5.    In the process of screw transfer molding
the barrel temperature is maintained at 20-30°C less
than the temperature of the transfer chamber.

Example XV

This example is illustrative of preparing a
high void volume, self-metering liquid retentive pad
or roller with a significantly reduced percentage of
void forming materials utilizing the injection or
screw transfer molding process.  A composite is prepared
exactly as in Example X except that a 5.0% addition,
based on the weight of the thermoplastic resin of
azodicarbonamide chemical blowing agent is made.

The granulated composite with blowing agent
is continuously fed to the injection or screw transfer
molding machine hopper where the composite is molded
under the exact same conditions used in Example VIII.

The molded parts are then guided to a cooling
and leaching water tank when they are leached free of
the sodium nitrate salt.

The leached open celled or porous parts are
then oven or air dried.  The porous parts are complete
and ready for use as a pad or roller.  The pad or roller
may then be conventionally filled with liquid such as ink
by the methods well-known in the art.

Example XVI

This example is illustrative of preparing an
open celled high void volume pad, roller or similar
porous structure using a significantly reduced percentage
of void forming material.  The resultant product is
capable of being utilized not only for liquid retentive
pad or roller, but for numerous other applications
requiring or desiring an open celled or porous structure
having a high degree of void volume and compressibility.

The product is produced exactly as in Example XV with the following exceptions:

1. By weight, 14 parts of ethylene vinyl acetate resin having 15% vinyl acetate content and 1 part of DOP plasticizer are substituted for 15 parts of the syndiotactic 1, 2-polybutadiene resin.

2. The ground sodium nitrate is sized to between 200 to 450 microns.

This resultant product has a leather-like feel, excellent flex resilience, compression rebound, tear strength, and in addition, possesses excellent abrasion, oil and ozone resistance and good weatherability. The product demonstrates rapid moisture or fluid absorption thereby providing wide utility for use in items such as:

handle bar, tool and sporting equipment grips and components, point applicator rollers and pads, and sound and shock absorption components and filtering media.

Example XVII

A self metering liquid retentive pad is produced as follows. By weight 87.5 parts of particles of ground sodium nitrate, sized to less than 450 microns, are thoroughly mixed with 12.5 parts of thermoplastic syndiotactic 1, 2-polybutadine resin in a sigma blade type mixer having its jacket maintained at 130-150°C during a mixing time of 5-8 minutes. The resin has a Shore A hardness of 80-90 durometer.

The mixed salt-polymer composite is allowed to cool to room temperature before granulating in a mechanical chopper to a composite particle size of 1/8", maximum. The granulated composite is continuously fed to an injection or screw transfer feed hopper where it is molded exactly as the equipment and conditions stated in Example XII.

The molded parts are guided to a cooling and leaching water tank where the parts are leached free of salt.

-36-

The leached parts are then oven or air dried. The porous parts are complete and ready for use as a pad or roller. The pad or roller may then be conventionally filled with a liquid such as ink by the methods well-known in the art.

Example XVIII

A self-inked printing member with a complicated design based on a negative is prepared in accordance with Process A described above. The photopolymer is a liquid, Photopolymer grade FA 95 available from Hercules. The colorant is the same as that used in Example VII. Colorant and photopolymer are mixed at room temperature. The procedure is as described in Process A employing conventional conditions. Slightly longer light exposures are used due to the absorbance of the dye. Solvation of the dye gave a printing member with a highly complicated indicia in a long-life pad.

Example XIX

A self-inked printing member with a complicated design based on a negative is prepared in accordance with Process B described above. The photopolymer is based on thermoplastic syndoitactic 1, 2, butadiene with a photo-initiator 2, 2, dimethoxy-2-phenyl acetophenone which is 3-10% of the polymer. The void former is sodium nitrate sized to 200-450 microns. For a 100 parts of photopolymer, 400 parts of sodium nitrate.

Following the described Process B, perchlorolethylene is the solvent used to leach out the non-cross-linked polymer. The salt is subsequently washed out with water.

Although the invention has been described in detail with reference to certain preferred embodiments and specific examples, variations and modifications can be performed within the scope and spirit of the invention as described and as defined in the following claims.

What is claimed is:

1. The process of producing a porous article comprising the steps of:

A) mixing a dry particulate solid of a size of 2 to 450 microns with a polymeric material in a weight ratio of 2.5:1 to 10:1 solid to polymeric material, the solid being insoluble and unreactive with the polymeric material;

B) preplasticizing the solid and polymeric material to form a solid-polymer composite;

C) shaping the composite by casting, extruding, injection or screw-transfer molding, or the like to a finished article shape, whereby a more dense skin portion is formed on the surface of the article; and

D) adding to the article a solvent in which the solid is dissolved.

2. The process of Claim 1 wherein said dry particulate solid is a void-forming solid which is leached out of the finished article by the solvent added in Step D).

3. The process of Claim 2 wherein after Step D the article is impregnated with a fluid other than the solvent of Step D.

4. The process of Claim 3 wherein the fluid is an ink.

5. The process of Claim 3 wherein the fluid is a lubricant.

6. The process of Claim 2 wherein the void-forming solid is a sodium salt.

7. The process of Claim 2 wherein the void-forming solid is a friable polyglycol wax.

-38-

8. The process of Claim 1 wherein the dry particulate solid is an organic dye.

9. The process of Claim 1 wherein the dry particulate solid comprises a void former and a colorant, the ratio of colorant to void-former being between 20:1 and 1:1.

10 The process of Claim 1 further comprising the step of adding a blowing agent to the solid-polymer composite and during or subsequent to Step C) permitting the blowing agent to expand.

11. The process of Claim 10 wherein the blowing agent is present in an amount of between 0.5% and 5.0% by weight.

12. The process of Claim 1 further comprising subsequent to Step B) the additional step of granulating the solid-polymer composite.

13. The process of Claim 1 wherein the shaping step is achieved by extrusion.

14. The process of Claim 1 wherein the shaping step is achieved by injection molding.

15. The process of Claim 1 wherein the shaping step is achieved by screw-transfer molding.

16. The process of Claim 1 wherein the polymer is a photopolymer and wherein the process further comprises the steps of selectively subjecting a surface of the article to UV radiation and subsequently washing the irradiated article to remove uncrosslinked photopolymers.

17. A process of Claim 1 wherein the polymeric material is selected from the group consisting of polyester, polyolefin, polyurethane, ethylene vinyl acetate, 1, 2-polybutadiene, styrene-butadiene, polyvinyl chloride, SAN, ABS, ethylene-propylene, styrene-isoprene, styrene-polyolefin, CAB, Telfon FEB, nylon, polyethylene and polypropylene, NBR, SBR, butyl, acrylic, polychloroprene, fluoracarbon, silicone, natural rubber, polyisoprene, chlorinated polyethylene, ethylene-propylene, EPDM, PVS/NBR and ethylene-vinyl acetate.

18. A process of Claim 8 or 9 wherein the solvent for the colorant and/or void-former is selected from the group consisting of glycols, glycol ethers, high molecular weight alcohols, fatty acids, esters of fatty acids, glycol esters, mineral oils, petroleum oils, alcohol ethoxylates, polyoxyethylene esters, glycerols and glycerol esters.

19. A process of Claim 10 wherein the blowing agent is selected from the group consisting of nitrogen, carbon monoxide and carbon dioxide releasing blowing agents.

20. An article of manufacture produced according to any of the processes in Claims 1-19.

Fig.1

Fig.2

Fig.4

FIG.3

**Fig.5**

56

64

66

L

56

56

68

**Fig.6**

68

70

72

72

70

56

**Fig.7**

74

78

76

22

24

FIG.8

# EUROPEAN SEARCH REPORT

European Patent Office

## DOCUMENTS CONSIDERED TO BE RELEVANT

| Category | Citation of document with indication, where appropriate, of relevant passages | Relevant to claim |
|---|---|---|
| | FR - A - 1 581 442 (JOSEPH LUCAS)<br>* Abstract 1°,2°; page 2, lines 27-36 * | 1,7 |
| | -- | |
| A | GB - A - 1 404 293 (MATEK)<br>* Claims; page 5, line 50 on * | 1 |
| | -- | |
| A | DE - B - 1 301 473 (TAKAJI, FUNA-HASI)<br>* Entire document * | 1,6,<br>10,11 |
| | -- | |
| | GB - A - 680 277 (NATIONAL CASH REGISTER)<br>* Claim 1 * | 1-4,6 |
| | -- | |
| A | US - A - 2 392 521 (R.G. CHOLLAR)<br>* Claim 1 * | 1-4,6 |
| | -- | |
| A | NL - A - 301 480 (HOECHST)<br>* Claim 1 * | 1,5 |
| | ---- | |

**CLASSIFICATION OF THE APPLICATION (Int. Cl )**

C 08 J  9/26
              9/34
B 41 N  7/00
B 41 C  3/06
              3/04

**TECHNICAL FIELDS SEARCHED (Int.Cl. 3)**

C 08 J  9/26
              9/34
B 41 N  7/00
B 41 C  3/06
              3/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 24-05-1980 | HALLEMEESCH |

EPO Form 1503.1   06.78